# EUROPEAN PATENT APPLICATION

(11) **EP 4 723 333 A1**
(43) Date of publication of application: **08.04.2026**
(21) Application number: 23939186.5
(22) Date of filing: 14.09.2023
(51) Int. Cl.: H01M 50/244, H01M 50/24, H01M 10/613, H01M 10/6567, H01M 10/653

(54) **SEALING STRUCTURE AND ENERGY STORAGE MODULE**

(30) Priority: 26.05.2023 CN 202321331272 U
(71) Applicant: Sungrow Power Supply Co., Ltd., Hefei, Anhui 230088 (CN)
(72) Inventor: DONG, Puyun, Hefei, Anhui 230088 (CN); YU, Jian, Hefei, Anhui 230088 (CN); SU, Jinguo, Hefei, Anhui 230088 (CN); ZHOU, Meng, Hefei, Anhui 230088 (CN); WANG, Hao, Hefei, Anhui 230088 (CN)
(74) Representative: Zacco Norway AS
(86) International application number: PCT/CN2023/118759
(87) International publication number: WO 2024/244211

(57) **Abstract**

A sealing structure and an energy storage module. The sealing structure comprises a bottom supporting plate and a covering assembly, wherein at least one module unit body is mounted on the bottom supporting plate; the covering assembly has a covering inner cavity, which adapts to the module unit body in terms of shape and size, and a covering opening, which is in sealing fit with the bottom supporting plate, and the covering assembly is provided with a wiring slot for allowing an output member of the module unit body to lead out a wire; and the part of the output member passing through the wiring slot is filled and sealed in the wiring slot by means of a filling-sealing adhesive. By means of making improvements to the design for a casing of each module unit body of the energy storage module, a sealing effect which is required for the electrical safety of the module unit body can be achieved by the casing of the module unit body, and the overall structure of the energy storage module is simplified, such that the machining and assembly are more convenient, and the production cost is also reduced. When an electronic control assembly connected to the module unit body is maintained, the sealing performance of the module unit body itself is not affected, such that maintenance operations are safer and more convenient.

## Description

The present application claims the priority to Chinese Patent Application No. 202321331272.0, titled "SEALING STRUCTURE AND ENERGY STORAGE MODULE", filed on May 26, 2023 with the China National Intellectual Property Administration, which is incorporated herein by reference in its entirety.

### FIELD

The present application relates to the technical field of module sealing, and in particular to a sealing structure and an energy storage module.

### BACKGROUND

In existing energy storage systems, to prevent electrical safety issues caused by internal condensation during heat dissipation of energy storage equipment and to meet physical protection requirements of energy storage modules, taking liquid-cooled battery packs as an example, their sealing structures typically adopt sealing methods used in power batteries. Specifically, this involves forming a sealed shell by a box body combined with an upper cover. With such sealing methods, the sealing effect is achieved mainly through the elastic compression of a sealing gasket between the upper cover and the box body.

The sealing methods for the energy storage modules, however, encounter numerous problems in practical applications. For instance, the high-level protection design featuring multiple shells (both system shells and module housings) leads to structural redundancy. The fabrication and inspection processes for the sealing structures of the shells are cumbersome, involving complex procedures and stringent sealing requirements. The system shells need to incorporate pressure-balancing structures such as pressure relief valves and breather valves to prevent the system shells from rupturing. The design and assembly processes for the sealing structures of the system shells demand extremely high standards, with the upper cover of the sealed shell requiring a large number of screws for fastening, resulting in low assembly efficiency. During maintenance, disassembling the upper cover can easily lead to sealing failure. In summary, the current sealing structures of the energy storage modules generally suffer from structural redundancy and inconvenience in fabrication, assembly, and maintenance.

In conclusion, how to address the issues of structural redundancy and inconvenience in fabrication, assembly, and maintenance of the sealing structures of the energy storage modules has become an urgent technical problem that needs to be solved by those skilled in the art.

### SUMMARY

In view of this, a sealing structure and an energy storage module is provided according to the present application, to address the issues of structural redundancy and inconvenience in fabrication, assembly, and maintenance associated with the sealing structure of the energy storage module.

In order to achieve the above object, the following technical solutions are provided according to the present application.

A sealing structure, being applied to an energy storage module, includes:
a bottom supporting plate, on which at least one module unit body is mounted; and
a covering assembly, which has a covering inner cavity matching the module unit body in terms of shape and size and a covering opening in a sealed engagement with the bottom supporting plate;
the covering assembly is provided with a wiring slot for allowing an output member of the module unit body to lead out a wire, and a part of the output member passing through the wiring slot is encapsulated within the wiring slot via potting adhesive.

Optionally, the covering assembly includes an insulating cover plate that matches with a top surface and two side surfaces of the module unit body, and two insulating end plates that matches with end surfaces of the module unit body. The two insulating end plates are assembled with two end openings of the insulating cover plate respectively in a hermetically sealing way to form the covering assembly.

Optionally, the wiring slot is disposed on the insulating end plate.

Optionally, the insulating end plate is embedded into the end opening of the insulating cover plate, and an assembly gap between the insulating end plate and the insulating cover plate is sealed by a flexible sealing layer.

Optionally, the flexible sealing layer is a flexible sealing gasket.

Optionally, a pressing strip is further provided on an outer side of the insulating cover plate corresponding to a position of the flexible sealing gasket. The pressing strip is used to squeeze the insulating cover plate to make the flexible sealing gasket be tightly sealed and sandwiched between the insulating end plates and the insulating cover plate.

Optionally, the flexible sealing layer is a thixotropic sealant layer or a potting adhesive layer.

Optionally, the sealing structure further includes two rigid end plates and a tensioning assembly. The two rigid end plates are respectively arranged on outer end surfaces of the two insulating end plates, and the tensioning assembly is used to pull the two rigid end plates closer together.

Optionally, the insulating cover plate is a thermally bent and formed cover plate structure or a vacuum-formed cover plate structure.

Optionally, a top surface of the bottom supporting plate is provided with a liquid-cooling structure, and the module unit body is arranged with the liquid-cooling structure with heat conduction.

Optionally, heat transfer between the module unit body and the liquid-cooling structure is achieved through a thermally conductive adhesive layer, and the covering opening is inserted into the thermally conductive adhesive layer.

Compared with the content introduced in the background technology, the aforementioned sealing structure, when applied to the energy storage module, includes the bottom supporting plate and the covering assembly. The bottom supporting plate is provided with at least one module unit body. The covering assembly has the covering inner cavity which matches the module unit body in terms of shape and size, and the covering opening, which is in a sealed engagement with the bottom supporting plate. The covering assembly is provided with the wiring slot for allowing an output member of the module unit body to lead out a wire. A part of the output member passing through the wiring slot is encapsulated in the wiring slot via potting adhesive. In practical application, the module unit body is placed on the bottom supporting plate in the sealing structure. Given that the covering assembly has the covering inner cavity that matches the module unit body in terms of shape and size and the covering opening that is in a sealed engagement with the bottom supporting plate, the module unit body can be sealed by simply placing the covering assembly over the module unit body and through the sealed engagement between the covering opening and the bottom supporting plate. This eliminates the need for an upper cover in the overall shell of the energy storage module. Via making improvements to the design for the shell of each module unit body of the energy storage module, a sealing effect which is required for the electrical safety of the module unit body can be achieved by the shell of the module unit body, and the overall structure of the energy storage module is simplified, such that the machining and assembly are more convenient, and the production cost is also reduced. Additionally, since the covering assembly is provided with a wiring slot for allowing an output member of the module unit body to lead out a wire, and a part of the output member passing through the wiring slot is filled and sealed in the wiring slot via potting adhesive, when the module unit body malfunctions and generates high-temperature, high-pressure gas, the potting adhesive, upon exposure to the high-temperature, high-pressure gas, will melt into a liquid state. The high-temperature, high-pressure gas can then escape through the liquid potting adhesive, achieving the purpose of pressure relief. This eliminates the need for pressure relief valves or other pressure-balancing structures, further simplifying the overall structure of the energy storage module and reducing production costs. Moreover, when maintaining the electrical control assembly connected to the module unit body, the sealing integrity of the module unit body itself remains unaffected, making maintenance operations safer and more convenient.

Furthermore, an energy storage module is further provided according to the present application, including the sealing structure, which is described in any one of the above embodiments. Since the sealing structure possesses the aforementioned technical advantages, the energy storage module provided with this sealing structure also inherits corresponding technical benefits, which will not be elaborated on further here.

### BRIEF DESCRIPTION OF THE DRAWINGS

For more clearly illustrating embodiments of the present application or technical solutions in the conventional technology, drawings referred to for describing the embodiments or the conventional technology will be briefly described hereinafter. Apparently, the drawings in the following description are only some embodiments of the present application, and for those skilled in the art, other drawings may be obtained based on the provided drawings without any creative efforts.
FIG. 1 is a schematic isometric structural view of an energy storage module provided according to an embodiment of the present application;
FIG. 2 is a schematic isometric structural view illustrating a covering assembly provided according to an embodiment of the present application being tightly sealed on an outer side of the module unit body via a pressing strip;
FIG. 3 is a schematic exploded structural view illustrating a covering assembly provided according to an embodiment of the present application being tightly sealed on an outer side of the module unit body via a pressing strip;
FIG. 4 is a schematic cross-sectional structural view illustrating a covering assembly provided according to an embodiment of the present application being tightly sealed on an outer side of the module unit body via a pressing strip;
FIG. 5 is a schematic isometric structural view illustrating a covering assembly provided according to an embodiment of the present application being placed over an outer side of the module unit body through a thixotropic sealing adhesive layer or a potting adhesive layer;
FIG. 6 is schematic exploded structural view illustrating a covering assembly provided according to an embodiment of the present application being placed over an outer side of the module unit body through a thixotropic sealing adhesive layer or a potting adhesive layer;
FIG. 7 is a schematic cross-sectional structural view illustrating a covering assembly provided according to an embodiment of the present application being placed over an outer side of the module unit body through a thixotropic sealing adhesive layer or a potting adhesive layer.

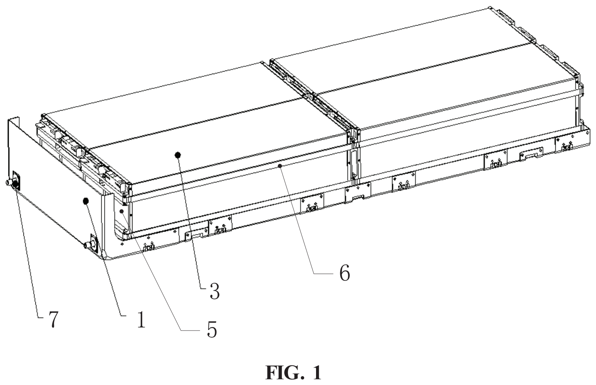

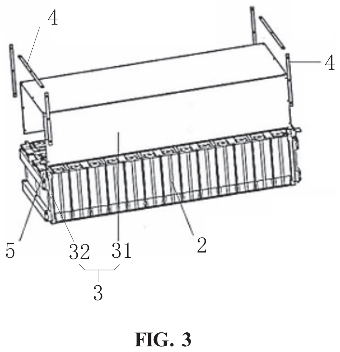

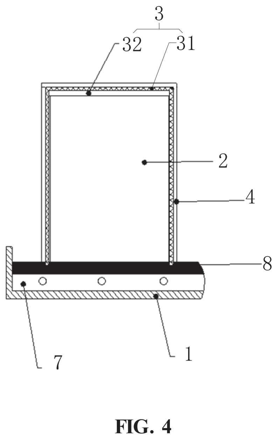

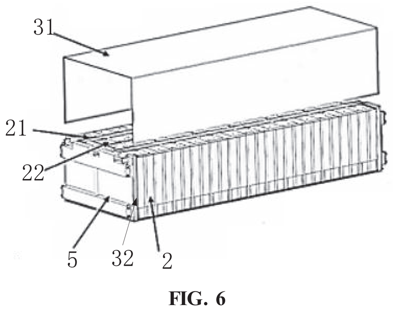

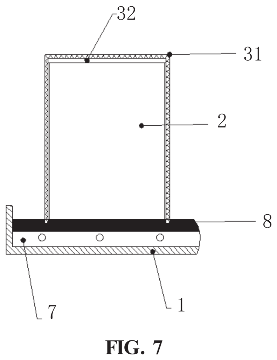

Reference numerals in FIG. 1 to FIG. 7:
1 bottom supporting plate;
2 module unit body, 21 output member, 22 electrode tab;
3 covering assembly, 31 insulating cover plate, 32 insulating end plate;
4 pressing strip;
5 rigid end plate;
6 tensioning assembly;
7 liquid-cooling structure;
8 thermal conductive adhesive layer.

### DETAILED DESCRIPTION OF THE EMBODIMENTS

A core of the present application is to provide a sealing structure and an energy storage module, to address the issues of structural redundancy and inconvenience in fabrication, assembly, and maintenance associated with the sealing structure of the energy storage module.

Technical solutions of embodiments of the present application are clearly and completely described hereinafter in conjunction with the drawings of the embodiments of the present application. Apparently, the embodiments described are only some embodiments of the present application, rather than all embodiments. All other embodiments obtained by those skilled in the art based on the embodiments of the present application without any creative work fall within the protection scope of the present application.

Referring to FIGS. 1 to 7, a sealing structure for an energy storage module is specifically provided according to the present application, which includes a bottom supporting plate 1 and a covering assembly 3.

The bottom supporting plate 1 is provided with at least one module unit body 2. The specific number of the at least one module unit body 2 may be determined by energy storage requirements of the energy storage module, which will not be limited herein. Additionally, it should be understood by those skilled in the art that the module unit body 2 is generally composed of multiple battery cells assembled and connected together. Adjacent two battery cells may be electrically connected through an electrode tab 22. The specific way of electrical connection may be series, parallel, or a combination of both, and may be selected based on actual needs during practical application, which will not be limited herein. Furthermore, the module unit body 2 generally further includes an output member 21 for signal acquisition and wiring, module fasteners, and etc..

Moreover, the covering assembly 3 has a covering inner cavity that matches the module unit body 2 in terms of shape and size, and a covering opening that can be in a sealed engagement with the bottom supporting plate 1. The covering inner cavity is mainly used to accommodate the module unit body 2, and the covering opening is mainly used to engage with the bottom supporting plate 1 to meet the sealing requirements of the module unit body 2. To meet the wiring requirements of the module unit body 2, the covering assembly 3 is generally further provided with a wiring slot for allowing the output member 21 of the module unit body 2 to lead out a wire, and a part of the output member 21 passing through the wiring slot is encapsulated in the wiring slot via potting adhesive. It should be noted that those skilled in the art should understand that at least the covering inner cavity of the covering assembly 3 is made of insulating material to prevent short-circuiting the battery cells of the module unit body 2. Similarly, at least a surface of the bottom supporting plate 1 for mounting the module unit body 2 is provided with insulating material.

In practical application, the module unit body 2 is placed on the bottom supporting plate 1. Given that the covering assembly 3 has the covering inner cavity that matches the module unit body 2 in terms of shape and size and has the covering opening that is in the sealed engagement with the bottom supporting plate 1, the module unit body 2 can be sealed by simply placing the covering assembly 3 over the module unit body 2 and through the sealed engagement of the covering opening and the bottom supporting plate 1. This eliminates the need for an upper cover in the overall shell of the energy storage module. By making improvements to the design for the shell of each module unit body 2 of the energy storage module, a sealing effect which is required for the electrical safety of the module unit body 2 can be achieved by the shell of the module unit body, and the overall structure of the energy storage module is simplified, such that the machining and assembly are more convenient, and the production cost is also reduced. Additionally, since the covering assembly 3 is provided with the wiring slot for allowing the output member 21 of the module unit body 2 to lead out a wire and a part of the output member 21 passing through the wiring slot is encapsulated within the slot via potting adhesive, the potting adhesive, upon exposure to the high-temperature, high-pressure gas, will melt into a liquid state when the module unit body 2 malfunctions and generates high-temperature, high-pressure gas. The high-temperature, high-pressure gas can then escape through the liquid potting adhesive, achieving the purpose of pressure relief. This eliminates the need for pressure-balancing structures such as pressure relief valves, further simplifying the overall structure of the energy storage module and reducing production costs. Moreover, when the electrical control assembly connected to the module unit body 2 is maintained, the sealing integrity of the module unit body 2 itself remains unaffected, making maintenance operations safer and more convenient.

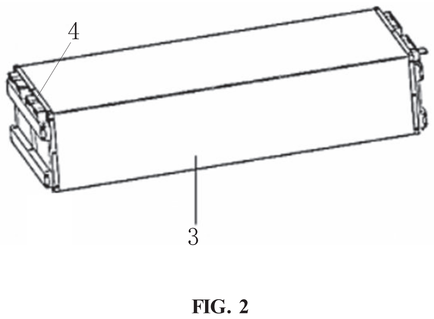

In some specific embodiments, referring to FIGS. 2 to 7, the aforementioned covering assembly 3 may specifically include an insulating cover plate 31 that matches with a top surface and two side surfaces of the module unit body 2, and two insulating end plates 32 that match with end surfaces of the module unit body 2. The two insulating end plates 32 are assembled with two end openings of the insulating cover plate 31 respectively in a hermetically sealing way to form the covering assembly 3. By designing the covering assembly 3 in a structure having the insulating cover plate 31 and the insulating end plates 32, the structure can be better fitted and mounted with the module unit body 2, thereby minimizing space waste. Also, it should be understood that in practical applications, the covering assembly 3 may also be designed as an integrated structure, and the specific configuration can be selected based on actual needs.

It should be noted that, referring to FIGS. 2 to 7, the insulating cover plate 31 may specifically be made of insulating plastic, epoxy resin, or other insulating and waterproof materials. It may be a thermally bent and formed cover plate structure or a vacuum-formed cover plate structure. To save costs, the insulating cover plate 31 generally adopts relatively thin-walled insulating plastic, such as a vacuum-formed U-shaped plastic structure. The insulating end plates 32, on the other hand, generally need to meet the requirements for compressing the assembled battery cells of the module unit body 2. Therefore, the wall thickness of the insulating end plates 32 is generally relatively thicker compared to that of the insulating cover plate 31. Consequently, the wiring slot is preferably provided on the insulating end plates 32, which facilitates the processing and arrangement of the wiring slot. Also, it should be understood that in practical applications, a locally thickened structure may also be designed on the insulating cover plate 31, and the wiring slot may be processed on this locally thickened structure. In practical applications, the specific configuration may be determined based on actual needs, which will not be limited herein.

In some more specific embodiments, the aforementioned insulating end plates 32 are embedded into the end openings of the insulating cover plate 31, and an assembly gap between the insulating end plates 32 and the insulating cover plate 31 is sealed by a flexible sealing layer. By designing this flexible sealing layer, both the preload force after the assembly of the insulating end plates 32 and the insulating cover plate 31 and the sealing performance between the insulating end plates 32 and the insulating cover plate 31 can be ensured.

In further embodiments, referring to FIGS. 2 to 4, the aforementioned flexible sealing layer may specifically be a flexible sealing gasket, such as a rubber gasket. In this case, a pressing strip 4 may be provided on an outer side of the insulating cover plate 31 corresponding to a position of the flexible sealing gasket. The pressing strip 4 squeezes an outer sidewall of the insulating cover plate 31 to make the flexible sealing gasket be tightly sealed and sandwiched between the insulating end plates 32 and the insulating cover plate 31, thereby achieving sealing performance between the insulating end plates 32 and the insulating cover plate 31. The pressing strip 4 may specifically be fastened to the corresponding position of the insulating end plates 32 via fastening screws. The use of the pressing strip 4 minimizes the deformation of the insulating cover plate 31 caused by fastening. Additionally, the pressing strip 4 may be an independent structure or an integrated structure with the insulating cover plate 31, which will not be limited herein. Also, it should be understood that the use of the pressing strip 4 is merely an example in the embodiments of the present application. In practical applications, other fastening mechanisms may also be used to achieve tight sealing between the two, and are not limited to the pressing strip 4.

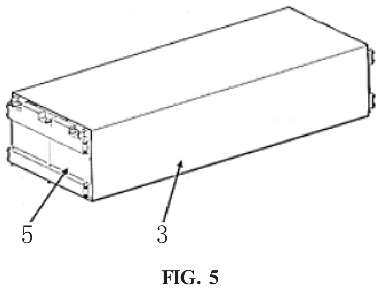

In some other specific embodiments, referring to FIGS. 5 to 7, the aforementioned flexible sealing layer may also be a thixotropic sealant layer or a potting adhesive layer. Compared to a flexible insulating gasket, applying the thixotropic sealant layer (preferably a sealant with high thixotropy) between the insulating cover plate 31 and the insulating end plates 32, and then compressing them together (specifically via a tooling fixture for compression), allows the two to be tightly bonded by the sealant. This approach offers higher sealing reliability, eliminates the need for the pressing strips, helps reduce costs, and removes the requirement for fastening screws, thereby lowering electrical safety risks.

In some specific embodiments, referring to FIGS. 5 to 7 in conjunction with FIG. 1, to ensure the sealing effectiveness between the module unit body 2 and its shell (i.e., the insulating cover plate 31 and the insulating end plates 32), the sealing structure may further include two rigid end plates 5 and a tensioning assembly 6. The two rigid end plates 5 are respectively arranged on outer end surfaces of the two insulating end plates 32. The tensioning assembly 6 is used to pull the two rigid end plates 5 closer together, thereby ensuring the stability of the module unit body 2 after assembly with its shell. The tensioning assembly 6 may specifically be a tensioning strap or other commonly used tensioning structures by those skilled in the art, such as tensioning screws.

In some other specific embodiments, referring to FIGS. 1, 4, and 7, a top surface of the bottom supporting plate 1 may further be provided with a liquid-cooling structure 7, and the module unit body 2 is arranged with the liquid-cooling structure 7 with heat conduction. By incorporating a liquid-cooling structure, the heat dissipation performance of the module unit body 2 is improved. The liquid-cooling structure 7 may specifically be a liquid-cooling structure fabricated on the bottom supporting plate 1 or a separate liquid-cooling plate structure on the top of the bottom supporting plate 1. The specific configuration can be selected based on actual needs, which will not be limited herein.

In further embodiments, referring to FIGS. 1, 4, and 7, to enhance the heat transfer efficiency between the module unit body 2 and the liquid-cooling structure 7, a heat conductive adhesive layer 8 may be arranged between the module unit body 2 and the liquid-cooling structure 7. Heat transfer through the heat conductive adhesive layer 8 enables higher heat transfer efficiency between the module unit body 2 and the liquid-cooling structure 7. Additionally, the covering opening of the covering assembly 3 may be inserted into the heat conductive adhesive layer 8, which further improves the sealing performance of the entire module unit body 2.

Furthermore, an energy storage module is further provided according to the present application, including the sealing structure described in any of the aforementioned technical solutions. Since the sealing structure offers the aforementioned technical advantages, the energy storage module incorporating this sealing structure should also possess corresponding technical benefits, which will not be elaborated on further here.

It should be noted that all the embodiments in this specification are described in a progressive way, and each embodiment focuses on the differences from other embodiments. The same and similar parts among the embodiments can be referred to each other.

It should be understood that if "system" and/or "device" are used herein, it is merely a method for distinguishing different assemblies, elements, components, portions or assembly at different levels. However, if other expressions can realize the same purpose, they may be replaced by other expressions.

As shown in the present application and the claims, the words "a", "one", "one type" and/or "this" are not specifically referring to the singular, but may also include the plural, unless the context clearly indicates exceptions. Generally speaking, the terms "include" and "comprise" only indicate that the steps and elements that have been clearly identified are included, and these steps and elements do not constitute an exclusive list. A method or an apparatus may also contain other steps or elements. The elements limited by the statement "comprising (including) a..." do not exclude the existence of other identical elements exist in the process, method, product or apparatus that includes the elements.

In the description of the embodiments of the present application, unless otherwise specified, "/" means or, for example, A/B can mean A or B. The "and/or" herein is only an association relationship that describes the associated objects, which means that there may be three kinds of relationships, for example, A and/or B may mean that there are three cases: A alone, A and B at the same time, and B alone. In addition, in the description of the embodiments of the present application, "multiple" refers to two or more.

The terms "first", "second" and the like are for purpose of description, and should not be interpreted as indicating or implying relative importance or implying the number of the indicated technical features. Therefore, a feature defined by "first" or "second" may explicitly or implicitly includes one or more such features.

The flowchart, if used in the present application, is for illustrating operations performed by the system according to the embodiments of the present application. It should be understood that the operations are not necessarily performed in the listed order. The steps may be performed in a reverse order or in parallel. In addition, other operations may be added to these procedures, or one or more operations can be removed from these procedures.

The principle and implementations of the present application are described herein by using specific examples, and the description of the above embodiments is only used to help understand the core idea of the present application. It should be noted that, several improvements and modifications may be made by those skilled in the art to the present application without departing from the principle of the present application, and these improvements and modifications also fall within the protection scope of the claims of the present application.

## Claims

1. A sealing structure for an energy storage module, comprising:
a bottom supporting plate (1), on which at least one module unit body (2) is mounted; and
a covering assembly (3), having a covering inner cavity that matches the module unit body (2) in terms of shape and size and having a covering opening that is in a sealed engagement with the bottom supporting plate (1);
wherein the covering assembly (3) is provided with a wiring slot for allowing an output member (21) of the module unit body (2) to lead out a wire, and a portion of the output member (21) passing through the wiring slot is encapsulated within the wiring slot via potting adhesive.

2. The sealing structure according to claim 1, wherein the covering assembly (3) comprises an insulating cover plate (31) and two insulating end plates (32), and the insulating cover plate (31) matches with a top surface and two side surfaces of the module unit body (2), the two insulating end plates (32) match with end surfaces of the module unit body (2), the two insulating end plates (32) are assembled with two end openings of the insulating cover plate (31) respectively in a hermetically sealing way to form the covering assembly (3).

3. The sealing structure according to claim 2, wherein the wiring slot is disposed on the insulating end plate (32).

4. The sealing structure according to claim 2, wherein the insulating end plate (32) is embedded into the end opening of the insulating cover plate (31), and an assembly gap between the insulating end plate (32) and the insulating cover plate (31) is sealed by a flexible sealing layer.

5. The sealing structure according to claim 4, wherein the flexible sealing layer is a flexible sealing gasket.

6. The sealing structure according to claim 5, wherein a pressing strip (4) is further provided on an outer side of the insulating cover plate (31) corresponding to a position of the flexible sealing gasket, the pressing strip (4) being configured to squeeze the insulating cover plate (31) to make the flexible sealing gasket be tightly sealed and sandwiched between the insulating end plates (32) and the insulating cover plate (31).

7. The sealing structure according to claim 4, wherein the flexible sealing layer is a thixotropic sealant layer or a potting adhesive layer.

8. The sealing structure according to claim 2, further comprising two rigid end plates (5) and a tensioning assembly (6), wherein the two rigid end plates (5) are respectively arranged on outer end surfaces of the two insulating end plates (32), and the tensioning assembly (6) is used to pull the two rigid end plates (5) closer together.

9. The sealing structure according to claim 2, wherein the insulating cover plate (31) is a thermally bent and formed cover plate structure or a vacuum-formed cover plate structure.

10. The sealing structure according to claim 1, wherein a top surface of the bottom supporting plate (1) is provided with a liquid-cooling structure (7), and the module unit body (2) is arranged with the liquid-cooling structure (7) with heat conduction.

11. The sealing structure according to claim 10, wherein heat transfer between the module unit body (2) and the liquid-cooling structure (7) is achieved through a thermally conductive adhesive layer (8), and the covering opening is inserted into the thermally conductive adhesive layer (8).

12. An energy storage module, comprising a sealing structure according to any one of claims 1 to 11.
